# EUROPÄISCHE PATENTSCHRIFT

(11) **EP 2 124 117 B1**
(45) Veröffentlichungstag und Bekanntmachung des Hinweises auf die Patenterteilung: **02.05.2012**
(21) Anmeldenummer: 08009394.1
(22) Anmeldetag: 21.05.2008
(51) Int. Cl.: G05B 19/409

(54) **Bedieneinrichtung zur Bedienung einer Werkzeugmaschine**
Operating device for operating a machine tool
Dispositif de commande destiné à la commande d'une machine-outil

(43) Veröffentlichungstag der Anmeldung: 25.11.2009
(73) Patentinhaber: SIEMENS AKTIENGESELLSCHAFT, 80333 München (DE)
(72) Erfinder: Friedrich, Ralf, 91074 Herzogenaurach (DE)

(56) Entgegenhaltungen:
- EP-A- 1 510 893
- JP-A- 11 262 883
- JP-A- 2000 305 614
- JP-A- 2006 350 602
- US-A- 4 988 982
- US-A- 6 088 628
- US-B1- 6 535 787

## Beschreibung

Die Erfindung betrifft eine Bedieneinrichtung zur Bedienung einer Werkzeugmaschine.

An Werkzeugmaschinen können Verfahrbewegungen eines bewegbaren Maschinenelements, das z.B. in Form einer Spindelmotors vorliegen kann, in einem sogenannten Handbetrieb ausgeführt werden. Eine dabei häufig verwendete Methode ist das Verfahren des Maschinenelements in Richtung einer Achse der Werkzeugmaschine mittels eines Handrades. Bedieneinrichtungen zur Bedienung von Werkzeugmaschinen weisen deshalb häufig Handräder auf, wobei die Bedieneinrichtungen entweder fest an der Werkzeugmaschine montiert sein können oder in Form von sogenannten Bedienhandgeräten, die in einem bestimmten Bereich um die Maschine eine ortsunabhängige Bedienung der Werkzeugmaschine ermöglichen, ausgebildet sein. Das Handrad ist dabei bei handelsüblichen Bedieneinrichtungen als mechanisches Handrad ausgebildet, bei dem das Handrad drehbar gegenüber dem Gehäuse der Bedieneinrichtung angeordnet ist. Über den in Folge der notwendigen Drehbewegung zwangsläufig auftretenden Spalt zwischen dem Handrad und dem ruhenden Gehäuse können relativ leicht Schmutzpartikel, Flüssigkeiten und Gase in die Bedieneinrichtung eindringen und die empfindliche Elektronik im Inneren der Bedieneinrichtung beschädigen, was zu einem Ausfall der Bedieneinrichtung oder zu Fehlfunktionen führen kann. Insbesondere im Umfeld von Werkzeugmaschinen treten häufig Schmutzpartikel, Flüssigkeiten und Gase, welche z.B. durch den Bearbeitungsvorgang des Werkstücks entstehen, auf.

Aus dem PC-Bereich sind berührungsempfindliche Flächen bekannt, die z.B. in Form von sogenannten Touchpads vorliegen können. Im PC-Bereich, werden solche berührungsempfindliche Flächen eingesetzt, um den sonst notwendigen Anschluss einer externen Maus zur der Bedienung des Mauszeigers zu vermeiden. Aus der US7046230 B2 ist die Verwendung von Touchpads bei Abspielgeräten zur leichteren Bedienführung bekannt.

Aus der JP 2000305614 ist eine Bedieneinrichtung zur Bedienung einer Maschine bekannt, wobei die Bedieneinrichtung eine berührungsempfindliche Fläche aufweist.

Aus der JP 11262883 ist eine Bedieneinrichtung zur Bedienung eines Roboters bekannt.

Aus der US 6,088,628 ist eine Bedieneinrichtung, die ein berührungsempfindliches Display aufweist, zur Bedienung eines Roboters bekannt.

Aus der EP 1 510 893 A1 ist ein Verfahren und eine Vorrichtung zum Festlegen der Bewegungsbahn eines Handling-Systems bekannt, wobei die Bewegungsbahn eines Werkstücks entsprechend unterschiedlichen am Werkstück durchgeführten Prozessschritten mehrere Bewegungsabschnitte aufweist, wobei die Bewegungsbahn des Handling-Systems zunächst festgelegt und dann manuell korrigiert wird.

Es ist Aufgabe der Erfindung eine Bedieneinrichtung zur Bedienung einer Werkzeugmaschine zu schaffen, die unempfindlich gegenüber die Bedieneinrichtung umgebende Schmutzpartikel, Flüssigkeiten und/oder Gasen ist.

Diese Aufgabe wird gelöst, durch eine Bedieneinrichtung zur Bedienung einer Werkzeugmaschine, wobei die Bedieneinrichtung eine berührungsempfindliche Fläche aufweist, wobei die Bedieneinrichtung derart ausgebildet ist, dass bei einem Bewegen eines die Fläche berührenden Elements über eine Länge, von der Bedieneinrichtung, entsprechend der Länge ein Ausgangssignal zur Steuerung der Bewegung eines Maschinenelements in Richtung einer Achse der Werkzeugmaschine ausgegeben wird, wobei die Bedieneinrichtung mehrere berührungsempfindliche Flächen aufweist, wobei die Bedieneinrichtung derart ausgebildet ist, dass bei einem Bewegen eines die jeweilige Fläche berührenden Elements über eine Länge von der Bedieneinrichtung, entsprechend der Länge ein Ausgangssignal zur Steuerung der Bewegung eines Maschinenelements in Richtung einer der jeweiligen Fläche zugeordneten Achse der Werkzeugmaschine ausgegeben wird, und wobei zumindest ein Teil der berührungsempfindlichen Flächen auf verschiedenen Seiten der Bedieneinrichtung angeordnet ist.

Durch die Verwendung einer berührungsempfindlichen Fläche bei einer Bedieneinrichtung zur Bedienung einer Werkzeugmaschine anstelle der üblicherweise verwendeten Handräder tritt für den Fachmann die überraschende Wirkung auf, das berührungsempfindlichen Fläche sich sehr gut gegenüber dem Gehäuse der Bedieneinrichtung abdichten lassen, so dass das Eindringen von Schmutzpartikeln, Flüssigkeiten und Gasen in die Bedieneinrichtung zuverlässig verhindert wird.

Zur Bedienung der Werkzeugmaschine ist durch die Verwendung einer berührungsempfindlichen Fläche kein gegenüber dem Gehäuse der Bedieneinrichtung sich drehendes Bauteil mehr notwendig.

Vorteilhafte Ausbildungen der Erfindung ergeben sich aus den abhängigen Ansprüchen.

Es erweist sich als vorteilhaft, wenn die Bedieneinrichtung ein einzelnes oder mehrere Achsauswahlbedienelemente zur Auswahl der Achse aufweist, wobei im Falle von mehreren Achsauswahlbedienelementen jedes Achsauswahlbedienelement einer bestimmten Achse zugeordnet ist. Hierdurch wird eine einfache Auswahl einer bestimmten Achse in deren Richtung die Bewegung des Maschinenelementes erfolgen soll, ermöglicht.

Ferner erweist es sich als vorteilhaft, wenn die Bedieneinrichtung ein Proportionalitätsfaktorauswahlbedienelement zur Auswahl eines Proportionalitätsfaktors aufweist. Hierdurch wird auf einfache Art und Weise den Bediener die Auswahl ermöglicht, welcher Länge, die der Bediener z.B. mit seinem Finger über die berührungsempfindliche Fläche gegleitet ist, welcher Weglänge das Maschinenelement in Richtung der ausgewählten Achse der Werkzeugmaschine bewegt werden soll, entspricht.

Ferner erweist es sich als vorteilhaft, dass die Bedieneinrichtung mehrere berührungsempfindliche Flächen aufweist, wobei die Bedieneinrichtung derart ausgebildet ist, dass bei einem Bewegen eines die jeweilige Fläche berührenden Elements über eine Länge von der Bedieneinrichtung, entsprechend der Länge ein Ausgangssignal zur Steuerung der Bewegung eines Maschinenelements in Richtung einer der jeweiligen Fläche zugeordneten Achse der Werkzeugmaschine ausgegeben wird. Hierdurch können die Auswahlbedienelemente entfallen, da für jede zu verfahrende Achse eine berührungsempfindliche Fläche vorhanden ist.

Weiterhin erweist es sich als vorteilhaft, dass zumindest ein Teil der berührungsempfindlichen Flächen auf verschiedenen Seiten der Bedieneinrichtung angeordnet ist. Hierdurch, wird für den Bediener eine besonders anschauliche Bedienmöglichkeit geschaffen.

Ferner erweist es sich als vorteilhaft, wenn die Fläche oder die Flächen eine kreisförmige Form aufweisen. Hierdurch wird dem Bediener eine gegenüber den herkömmlich verwendeten Handrädern sehr ähnliche Bedienhandhabung ermöglicht.

Ferner erweist es sich als vorteilhaft, wenn die Fläche oder die Flächen eine längliche Form aufweisen. Hierdurch wird für den Anwender eine einfache Bedienmöglichkeit zur Bedienung der Werkzeugmaschine geschaffen.

Weiterhin erweist es sich als vorteilhaft, wenn das Element als Finger oder als Gegenstand ausgebildet ist. Eine Ausbildung des Elements als Finger oder als Gegenstand stellt eine übliche Ausbildung des Elements dar.

Ferner erweist es sich als vorteilhaft, wenn die Bedieneinrichtung als Handbedieneinrichtung ausgebildet ist, da insbesondere bei Handbedieneinrichtungen, also Bedieneinrichtungen welche von einem Anwender beim Betrieb getragen werden, Handräder häufig verwendet werden.

Ferner erweist es sich als vorteilhaft, eine Werkzeugmaschine mit der erfindungsgemäßen Bedieneinrichtung auszubilden.

Nähere Ausführungsbeispiele der Erfindung sind in der Zeichnung dargestellt und werden im Folgenden näher erläutert. Dabei zeigen:
- FIG 1: eine schematisiert dargestellte Werkzeugmaschine mit der erfindungsgemäßen Bedieneinrichtung,
- FIG 2: ein erstes Ausführungsbeispiel der erfindungsgemäßen Bedieneinrichtung,
- FIG 3: ein zweites Ausführungsbeispiel der erfindungsgemäßen Bedieneinrichtung,
- FIG 4: ein drittes Ausführungsbeispiel der erfindungsgemäßen Bedieneinrichtung,
- FIG 5: ein viertes Ausführungsbeispiel der erfindungsgemäßen Bedieneinrichtung und
- FIG 6: ein fünftes Ausführungsbeispiel der erfindungsgemäßen Bedieneinrichtung.

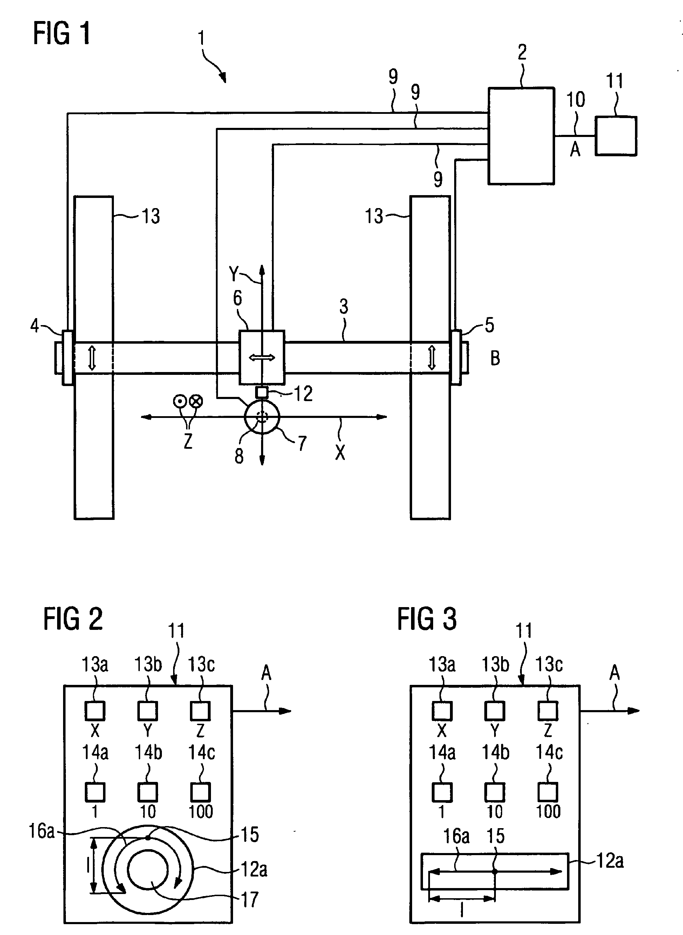

In FIG 1 ist in Form einer schematisierten Darstellung eine Werkzeugmaschine 1 und eine erfindungsgemäße Bedieneinrichtung 11 dargestellt. Es ist dabei in FIG 1 eine Ansicht von oben auf die Werkzeugmaschine 1 dargestellt. Die Werkzeugmaschine 1 weist ein ruhendes Maschinenbett 13 auf, auf der eine Traverse 3 mit Hilfe eines ersten Motors 4 und eines zweiten Motors 5 in Richtung einer Achse Y der Werkzeugmaschine bewegbar ist, was durch einen Doppelpfeil in FIG 1 dargestellt ist. Weiterhin weist die Werkzeugmaschine 1 ein Maschinenelement 7 auf, das im Rahmen des Ausführungsbeispiels als ein Spindelmotor ausgebildet ist. Der Spindelmotor treibt rotierend ein Werkzeug 8 an, wobei der Spindelmotor über einen vierten Motor 12 an einen dritten Motor 6 angekoppelt ist. Mit Hilfe des dritten Motors 6 kann der Spindelmotor 7 entlang der Traverse 3 in Richtung einer Achse X der Werkzeugmaschine bewegt werden, was durch einen entsprechenden Doppelpfeil in FIG 1 dargestellt ist. Mittels des Motors 12 kann der Spindelmotor 7 in Richtung einer Achse Z der Werkzeugmaschine, d.h. in der Darstellung gemäß FIG 1, in die Zeichenebene hinein und aus ihr heraus bewegt werden. Der Spindelmotor 7 kann solchermaßen mittels des ersten Motors 4 und des zweiten Motors 5 und des dritten Motors 6 und des vierten Motors 12 in Richtung der Achsen X, Y und Z verfahren werden.

Die Steuerung und Regelung der Werkzeugmaschine erfolgt mittels einer Steuer- und Regeleinrichtung 2 der Werkzeugmaschine 1. Die Steuer- und Regeleinrichtung 2 weist die zur Steuerung und Regelung der Werkzeugmaschine 1 notwendigen Steuer-und Regelkomponenten, sowie die zur Ansteuerung der elektrischen Motoren notwendigen Umrichter auf und ist über Verbindungen 9 mit den Motoren verbunden.

Weiterhin ist in FIG 1 eine erfindungsgemäße Bedieneinrichtung 11, die vorzugsweise in Form einer Handbedieneinrichtung ausgebildet ist und zur Bedienung der Werkzeugmaschine dient, dargestellt. Die Bedieneinrichtung 11 ist dabei mit der Steuer- und Regeleinrichtung 2 zur Übermittlung von Daten über eine Verbindung 10 verbunden. Die Bedieneinrichtung 11 erzeugt dabei zur Bedienung der Werkzeugmaschine ein Ausgangssignal A.

In FIG 2 ist in Form einer schematisierten Darstellung ein erstes Ausführungsbeispiel der erfindungsgemäßen Bedieneinrichtung 11 dargestellt. Die Bedieneinrichtung 11 weist eine berührungsempfindliche Fläche 12a auf, die im Rahmen dieses Ausführungsbeispiels eine kreisförmige Form aufweist. Vorzugsweise weist dabei die kreisförmige Fläche 12a eine Ausnehmung 17 auf, die nicht berührungsempfindlich ist. Die berührungsempfindliche Fläche 12a weist somit im Rahmen des Ausführungsbeispiels eine kreisförmige, insbesondere ringförmige berührungsempfindliche Fläche 12a auf, d.h. sie ist z.B. als so genannter "Wheel" ausgebildet.

Weiterhin weist die Bedieneinrichtung 11 zur Auswahl einer Achse der Werkzeugmaschine in deren Richtung die Bewegung des Maschinenelementes erfolgen soll Auswahlbedienelemente 13a, 13b und 13c aus. Die Auswahlbedienelemente 13a, 13b und 13c sind im Rahmen des Ausführungsbeispiels als Folienbedientasten ausgeführt. Jedes Auswahlbedienelement 13a, 13b und 13c ist mit einer jeweilig zugeordneten Beschriftung X, Y und Z versehen, die angibt, mit welchem Auswahlbedienelement die betreffende Achse der Werkzeugmaschine ausgewählt werden kann.

Weiterhin weist die Bedieneinrichtung 11 zur Auswahl eines Proportionalitätsfaktors Proportionalitätsfaktorauswahlbedienelemente 14a, 14b und 14c, die im Rahmen des Ausführungsbeispiels als Folientasten ausgebildet sind, auf. Jedes der Proportionalitätsfaktorauswahlbedienelemente 14a, 14b und 14c ist mit einer unterhalb des jeweiligen Proportionalitätsfaktorauswahlbedienelementes 14a, 14b und 14c angeordneten Beschriftung versehen, die dem jeweilig zum Proportionalitätsfaktorauswahlbedienelement zugeordneten Proportionalitätsfaktor angibt.

Zum Verfahren des Maschinenelementes in Richtung einer Achse der Werkzeugmaschine wird vom Bediener durch Drücken eines der Auswahlbedienelemente die entsprechende Achse in deren Richtung das Maschinenelement 7 verfahren werden soll, ausgewählt. Durch Drücken des Auswahlbedienelementes 13a wählt der Bediener z.B. die Achse X der Werkzeugmaschine 1 aus.

Anschließend wird durch Drücken einer der Proportionalitätsfaktorauswahlbedienelemente 14a, 14b oder 14c ein Proportionalitätsfaktor ausgewählt. Der Proportionalitätsfaktor gibt an, welcher Länge über die bei einem Bewegen eines die Fläche 12a berührenden Elements, die entsprechende Verfahrlänge in Richtung der ausgewählten Achse der Werkzeugmaschine des Maschinenelementes entspricht. Wenn der Bediener z.B. das Proportionalitätsfaktorauswahlbedienelement 14b durch Drücken betätigt, so bedeutet dies, z.B. das ein Millimeter Länge die auf der Fläche von den berührenden Elements zurückgelegt wird, einer Verfahrlänge des Maschinenelements 7 in Richtung der angewählten Achse von 10 Mikrometern entspricht.

Anschließend berührt der Bediener die Fläche 12a mit einem beliebigen Element, wie z.B. seinem Finger, insbesondere seiner Fingerspitze an einem Punkt 15 der Fläche 12a und bewegt anschließend die Fingerspitze in Richtung des Doppelpfeils 16a entweder nach links oder nach rechts über eine bestimmte gewünschte Länge 1, die z.B. vom Punkt 15 bis zur linksseitigen Pfeilspitze des Doppelpfeils 16a reicht. Anschließend zieht er seine Fingerspitze von der Fläche 12a zurück und beendet solchermaßen die Berührung mit der Fläche 12a. Da im Rahmen des Ausführungsbeispiels die Achse X der Werkzeugmaschine ausgewählt wurde, wird das Maschinenelement 7 im Rahmen des Ausführungsbeispiels, entsprechend der Länge 1 in der Darstellung gemäß FIG 1 in Richtung der Achse X der Werkzeugmaschine 1 nach links verfahren. Die Bedieneinrichtung 11 erzeugt hierzu ein entsprechendes Ausgangssignal A, das von der Steuer- und Regeleinrichtung 2 als Eingangssignal eingelesen wird. Die Steuer- und Regeleinrichtung 2 steuert dann entsprechend dem Ausgangssignal A die Bewegung des Maschinenelementes 7.

Wenn der Bediener ausgehend vom Berührungspunkt 15 über die Fläche 12a in Richtung des rechtsseitigen Pfeils des Doppelpfeils 16a die Bewegung seiner Fingerspitze führt, wird das Maschinenelement 7 entsprechend in FIG 1 nach rechts in Richtung der Achse X Werkzeugmaschine 1 verfahren.

Es sei an dieser Stelle angemerkt, dass das Element auch als Gegenstand, insbesondere z.B. als Stift ausgebildet sein kann.

Die in FIG 3 dargestellte Ausführungsform entspricht im Grundaufbau und von der Funktion im Wesentlichen der vorstehenden FIG 2 beschriebene Ausführungsform. Gleiche Elemente sind daher in FIG 3 mit den gleichen Bezugszeichen versehen wie in FIG 1. Der wesentliche Unterschied besteht darin, dass bei der Ausführungsform gemäß FIG 3 die berührungsempfindliche Fläche 12a eine längliche, insbesondere rechteckförmige Form, aufweist. Das Maschinenelement kann dabei, entsprechend wie in FIG 2 beschrieben, durch eine Bewegung des die Fläche 12a berührenden Elements nach links oder nach rechts über eine Länge 1 in Richtung einer ausgewählten Achse bewegt werden.

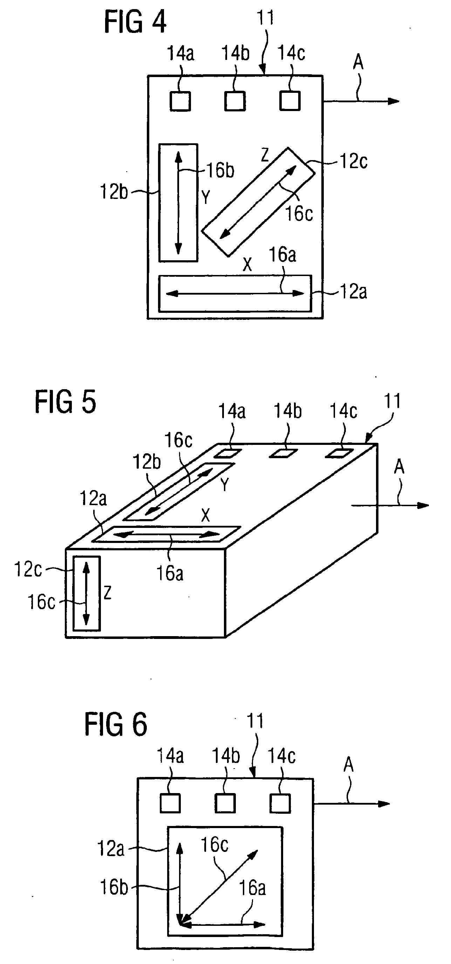

In FIG 4 ist eine weitere Ausbildung der Erfindung dargestellt. Die in FIG 4 dargestellte Ausführungsform entspricht im Grundaufbau der in FIG 3 und FIG 2 beschriebenen Ausführungsform. Anstelle einer einzelnen berührungsempfindlichen Fläche 12a weist die Bedieneinrichtung 11 mehrere berührungsempfindliche Flächen 12a, 12b und 12c auf, wobei bei einem Bewegen (angedeutet durch die Doppelpfeile 16a, 16b und 16c) eines die jeweilige Fläche 12a, 12b oder 12c berührenden Elements über eine bestimmte Länge von der Bedieneinrichtung 11 entsprechend der Länge das Ausgangssignal A zur Steuerung der Bewegung des Maschinenelementes in Richtung der der jeweiligen Fläche zugeordneten Achse X, Achse Y oder Achse Z der Werkzeugmaschine ausgegeben wird. Zu jeder Fläche 12a, 12b und 12c ist also genau eine einzelne Achse der Werkzeugmaschine 1 fest zugeordnet. Die Auswahlbedienelemente können somit entfallen. Möchte der Bediener z.B. das Maschinenelement 7 in Richtung der Achse Z verfahren, so bewegt er seine Fingerspitze über die Fläche 12c, möchte er in Richtung der Achse Y verfahren, so bewegt er seine Fingerspitze über die Fläche 12b und falls er das Maschinenelement in Richtung der Achse X der Werkzeugmaschine 1 bewegen möchte, so bewegt er seine Fingerspitze über die Fläche 12a.

In FIG 5 ist eine weitere Ausbildung der Erfindung dargestellt. Die in FIG 5 dargestellte Erfindung entspricht im Grundaufbau im Wesentlichen der vorstehend in FIG 4 dargestellten Ausführungsform. Gleiche Elemente sind daher in FIG 5 mit den gleichen Bezugszeichen versehen wie in FIG 2 und FIG 4. Der wesentliche Unterschied gegenüber der Ausführungsform gemäß FIG 4 besteht darin, dass zumindest ein Teil der berührungsempfindlichen Flächen auf verschiedenen Seiten der Bedieneinrichtung angeordnet ist. Im Rahmen des Ausführungsbeispiels gemäß FIG 5 ist die berührungsempfindliche Fläche 12c, die zum Bewegen des Maschinenelements 7 in Richtung der Achse Z dient, auf einer anderen Seite der Bedieneinrichtung 11 angeordnet wie die berührungsempfindlichen Flächen 12a und 12b. Da im Rahmen des Ausführungsbeispiels, für einen vor der Werkzeugmaschine stehenden Anwender die Achse Z eine senkrechte von oben nach unten oder umgekehrt verlaufende Bewegungsrichtung darstellt, ist entsprechend der berührungsempfindliche Bereich 12c zur Bewegung des Maschinenelementes 7 in Richtung der Achse Z auf einer entsprechenden angeordneten Seite der Bedieneinrichtung 11, d.h. im Ausführungsbeispiel von oben nach unten gehend, angeordnet. Hierdurch wird eine einfachere übersichtliche Bedienung der Werkzeugmaschine ermöglicht.

Weiterhin sei an dieser Stelle angemerkt, dass anstelle der in FIG 4 dargestellten drei berührungsempfindlichen Flächen auch nur eine einzelne berührungsempfindliche Fläche vorhanden sein kann, in der durch entsprechende Bewegungshandlungen von links nach rechts oder von oben nach unten oder von der linken unteren Ecke der Fläche zur rechten oberen Ecke oder jeweils umgekehrt, eine jeweilig zugehörige Achse entsprechend verfahren werden kann.

In FIG 6 ist eine solche Bedieneinrichtung, die eine berührungsempfindliche Fläche 12a aufweist, wobei bei einem Bewegen eines die Fläche berührenden Elements über eine Länge von der Bedieneinrichtung, entsprechend der Länge und Richtung der Bewegung ein Ausgangssignal A zur Steuerung der Bewegung des Maschinenelementes 7 in Richtung einer der jeweiligen Bewegung zugeordneten Achse der Werkzeugmaschine 1 ausgegeben wird. Ansonsten entspricht die Funktionsweise der Ausbildung der Erfindung gemäß FIG 6 der Ausbildung der Erfindung gemäß FIG 4.

Es sei an dieser Stelle angemerkt, dass die Bedieneinrichtung anstatt mehrerer Achsauswahlbedienelemente auch nur ein einzelnes Achsauswahlbedienelement aufweisen kann, wobei in diesem Fall die Auswahl der Achse durch entsprechend mehrfaches hintereinander Drücken des Achsauswahlbedienelements erfolgt.

Weiterhin sei an dieser Stelle angemerkt, dass die Bedieneinrichtung anstatt mehrerer Proportionalitätsfaktorauswahlbedienelemente auch nur ein einzelnes Proportionalitätsfaktorauswahlbedienelement aufweisen kann, wobei die Auswahl des Proportionalitätsfaktors durch entsprechend mehrfaches hintereinander Drücken des Proportionalitätsfaktorauswahlbedienelements erfolgt.

Weiterhin sei an dieser Stelle angemerkt, dass in den Ausführungsbeispielen gemäß FIG 4 und FIG 5 ein Teil der berührungsempfindlichen Flächen, so dass die Bedieneinrichtung kreisförmige und längliche Flächen aufweist, auch kreisförmig ausgebildet sein können oder alle Flächen kreisförmig ausgebildet sein können.

Ferner sei an dieser Stelle angemerkt, dass anstelle der Vorgabe einer Verfahrlänge um den das Maschinenelement bewegt werden soll (siehe Ausführungsbeispiel), mittels der erfindungsgemäßen Bedieneinrichtung, auch die Verfahrgeschwindigkeit mit der das Maschinenelement bewegen soll, vorgegeben werden kann. Die Verfahrgeschwindigkeit ist dann proportional zur Länge 1.

Ferner sei an dieser Stelle angemerkt, dass die Erfindung selbstverständlich auch bei rotatorischen Bewegungen des Maschinenelements angewendet werden kann. Im Falle von rotatorischen Bewegungen wird im Sinne der Erfindung unter dem Begriff "Bewegung eines Maschinenelements in Richtung einer Achse" die Drehbewegung des Maschinenelements um die Orientierung (d.h. um den Orientierungsvektor, der längs der Drehachse verläuft) der Drehachse der Bewegung im Raum verstanden. Das Maschinenelement kann dabei z.B. in Form eines drehbar angetriebenen Rundtisches, auf dem ein Werkstück eingespannt werden kann, ausgebildet sein.

## Patentansprüche

1. Bedieneinrichtung zur Bedienung einer Werkzeugmaschine (1), wobei die Bedieneinrichtung (11) eine berührungsempfindliche Fläche (12a) aufweist, wobei die Bedieneinrichtung (11) derart ausgebildet ist, dass bei einem Bewegen eines die Fläche (12a) berührenden Elements über eine Länge (1), von der Bedieneinrichtung (11), entsprechend der Länge (1) ein Ausgangssignal (A) zur Steuerung der Bewegung eines Maschinenelements (7) in Richtung einer Achse (X,Y,Z) der Werkzeugmaschine (1) ausgegeben wird,
**dadurch gekennzeichnet, dass** die Bedieneinrichtung (11) mehrere berührungsempfindliche Flächen (12a,12b,12c) aufweist, wobei die Bedieneinrichtung (11) derart ausgebildet ist, dass bei einem Bewegen eines die jeweilige Fläche (12a,12b,12c) berührenden Elements über eine Länge (1) von der Bedieneinrichtung (11), entsprechend der Länge (1) ein Ausgangssignal (A) zur Steuerung der Bewegung eines Maschinenelements (7) in Richtung einer der jeweiligen Fläche (12a,12b,12c) zugeordneten Achse (X,Y,Z) der Werkzeugmaschine (1) ausgegeben wird, wobei zumindest ein Teil der berührungsempfindlichen Flächen (12a,12b,12c) auf verschiedenen Seiten der Bedieneinrichtung (11) angeordnet ist.

2. Bedieneinrichtung nach einem der vorhergehenden Ansprüche, **dadurch gekennzeichnet , dass** die Bedieneinrichtung (11) ein einzelnes oder mehrere Achsauswahlbedienelemente (13a,13b,13c) zur Auswahl der Achse (X,Y,Z) aufweist, wobei im Falle von mehreren Achsauswahlbedienelementen (13a,13b,13c) jedes Achsauswahlbedienelement (13a,13b,13c) einer bestimmten Achse (X,Y,Z) zugeordnet ist.

3. Bedieneinrichtung nach einem der vorhergehenden Ansprüche, **dadurch gekennzeichnet , dass** die Bedieneinrichtung (11) ein Proportionalitätsfaktorauswahlbedienelement (14a,14b,14c) zur Auswahl eines Proportionalitätsfaktors aufweist.

4. Bedieneinrichtung nach einem der vorhergehenden Ansprüche, **dadurch gekennzeichnet , dass** die Fläche oder die Flächen eine kreisförmige Form (12a,12b,12c) aufweisen.

5. Bedieneinrichtung nach einem der vorhergehenden Ansprüche, **dadurch gekennzeichnet , dass** die Fläche oder die Flächen (12a,12b,12c) eine längliche Form aufweisen.

6. Bedieneinrichtung nach einem der vorhergehenden Ansprüche, **dadurch gekennzeichnet , dass** das Element als Finger oder als Gegenstand ausgebildet ist.

7. Bedieneinrichtung nach einem der vorhergehenden Ansprüche, **dadurch gekennzeichnet , dass** die Bedieneinrichtung (11) als Handbedieneinrichtung ausgebildet ist.

8. Werkzeugmaschine mit einer Bedieneinrichtung (11) nach einem der vorhergehenden Ansprüche.

## Claims

1. Operating device for operating a machine tool (1), the operating device (11) having a touch-sensitive area (12a), the operating device (11) being designed in such a manner that, when an element which touches the area (12a) is moved over a length (1), the operating device (11) outputs, in a manner corresponding to the length (1), an output signal (A) for controlling the movement of a machine element (7) in the direction of an axis (X, Y, Z) of the machine tool (1),
**characterized in that** the operating device (11) has a plurality of touch-sensitive areas (12a, 12b, 12c), the operating device (11) being designed in such a manner that, when an element which touches the respective area (12a, 12b, 12c) is moved over a length (1), the operating device (11) outputs, in a manner corresponding to the length (1), an output signal (A) for controlling the movement of a machine element (7) in the direction of an axis (X, Y, Z) of the machine tool (1), which axis is assigned to the respective area (12a, 12b, 12c), at least some of the touch-sensitive areas (12a, 12b, 12c) being arranged on different sides of the operating device (11).

2. Operating device according to the preceding claim,
**characterized in that** the operating device (11) has an individual axis selection operating element or a plurality of axis selection operating elements (13a, 13b, 13c) for selecting the axis (X, Y, Z), each axis selection operating element (13a, 13b, 13c) being assigned to a particular axis (X, Y, Z) if there are a plurality of axis selection operating elements (13a, 13b, 13c).

3. Operating device according to one of the preceding claims, **characterized in that** the operating device (11) has a proportionality factor selection operating element (14a, 14b, 14c) for selecting a proportionality factor.

4. Operating device according to one of the preceding claims, **characterized in that** the area or areas has/have a circular shape (12a, 12b, 12c).

5. Operating device according to one of the preceding claims, **characterized in that** the area or areas (12a, 12b, 12c) has/have an elongate shape.

6. Operating device according to one of the preceding claims, **characterized in that** the element is in the form of a finger or an object.

7. Operating device according to one of the preceding claims, **characterized in that** the operating device (11) is in the form of a handheld operating device.

8. Machine tool having an operating device (11) according to one of the preceding claims.

## Revendications

1. Dispositif de commande pour la commande d'une machine-outil ( 1 ), le dispositif ( 11 ) de commande ayant une surface ( 12a ) sensible au toucher, le dispositif ( 11 ) de commande étant tel que, lorsqu'un élément touchant la surface ( 12a ) se déplace sur une longueur ( 1 ) il est émis par le dispositif ( 11 ) de commande d'une manière correspondante à la longueur ( 1 ), un signal ( A ) de commande pour la commande du mouvement d'un élément ( 7 ) de machine dans la direction d'un axe ( X, Y, Z ) de la machine-outil ( 1 ), **caractérisé en ce que** le dispositif ( 11 ) de commande a plusieurs surfaces ( 12a, 12b, 12c ) sensibles au touché, le dispositif ( 11 ) de commande étant tel que, lorsqu'un élément touchant la surface ( 12a, 12b, 12c ) respectif se déplace sur une longueur ( 1 ) il est émis par le dispositif ( 11 ) de commande une manière correspondante à la longueur ( 1 ) un signal ( A ) de sortie pour la commande du mouvement d'un élément ( 7 ) de la machine dans la direction de l'un des axes ( X, Y, Z ) associé à la surface ( 12a, 12b, 12c ) respective, de la machine outil ( 1 ) au moins une partie des surfaces ( 12a, 12b, 12c ) sensible au toucher étant disposée sur des côtés différents du dispositif ( 11 ) de commande.

2. Dispositif de commande suivant l'une des revendications précédentes, **caractérisé en ce que** le dispositif ( 11 ) de commande a un seul ou plusieurs éléments ( 13a, 13b, 13c ) de commande de sélection d'axe pour la sélection de l'axe ( X, Y, Z ), dans lequel, dans le cas de plusieurs éléments ( 13a, 13b, 13c ) de commande de sélection d'axe, chaque élément ( 13a, 13b, 13c ) de commande de sélection d'axe est associé à un axe ( X, Y, Z ) déterminé.

3. Dispositif de commande suivant l'une des revendications précédentes, **caractérisé en ce que** le dispositif ( 11 ) de commande comporte un élément ( 14a, 14b, 14b ) de commande de sélection de facteur de proportionnalité pour la sélection d'un facteur de proportionnalité.

4. Dispositif de commande suivant l'une des revendications précédentes, **caractérisé en ce que** la surface ou les surfaces ont une forme ( 12a, 12b, 12c ) circulaire.

5. Dispositif de commande suivant l'une des revendications précédentes, **caractérisé en ce que** la surface ou les surfaces ( 12a, 12b, 12c ) ont une forme oblongue.

6. Dispositif de commande suivant l'une des revendications précédentes, **caractérisé en ce que** l'élément est constitué en doigt ou en objet.

7. Dispositif de commande suivant l'une des revendications précédentes, **caractérisé en ce que** le dispositif ( 11 ) de commande est constitué en dispositif de commande manuelle.

8. Machine-outil ayant un dispositif ( 11 ) de commande suivant l'une des revendications précédentes.
